(19) Europäisches Patentamt
European Patent Office
Office européen des brevets

(11)  **EP 3 672 793 B1**

(12)  **FASCICULE DE BREVET EUROPEEN**

(45) Date de publication et mention
de la délivrance du brevet:
**04.05.2022  Bulletin 2022/18**

(21) Numéro de dépôt: **18737931.8**

(22) Date de dépôt: **16.07.2018**

(51) Classification Internationale des Brevets (IPC):
**B32B 3/12** *(2006.01)*       **B01J 19/02** *(2006.01)*
**C10G 11/18** *(2006.01)*

(52) Classification Coopérative des Brevets (CPC):
**B32B 3/12; B01J 19/02; B32B 15/043;**
**C10G 11/18;** B01J 2219/0218; B01J 2219/0236;
B32B 2307/752; B32B 2439/00

(86) Numéro de dépôt international:
**PCT/EP2018/069216**

(87) Numéro de publication internationale:
**WO 2019/037950 (28.02.2019 Gazette 2019/09)**

(54)  **TREILLIS D'ANCRAGE D'UN REVETEMENT ANTI-EROSION**

VERANKERUNGSGEFLECHT FÜR EINE EROSIONSSCHUTZBESCHICHTUNG

ANCHORING MESH FOR AN ANTI-EROSION COATING

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité:  **23.08.2017  FR 1757810**

(43) Date de publication de la demande:
**01.07.2020  Bulletin 2020/27**

(73) Titulaire: **TotalEnergies Raffinage Chimie**
**92400 Courbevoie (FR)**

(72) Inventeur: **SIMON, Hubert**
**76620 Le Harve (FR)**

(74) Mandataire: **Raboin, Jean-Christophe**
**Total Research & Technology Feluy**
**Zone Industrielle C**
**7181 Seneffe (BE)**

(56) Documents cités:
**FR-A1- 3 028 307     US-A1- 2013 108 519**

## Description

La présente invention se rapporte à un treillis d'ancrage métallique destiné à être solidarisé à une paroi métallique d'une enceinte d'unité de raffinage pour pouvoir ancrer un revêtement anti-érosion.

Un domaine d'application envisagé est notamment, mais non exclusivement, celui des unités de craquage catalytique fluide, ou FCC pour « Fluid Catalytic Cracking » en langue anglaise.

Les unités de craquage catalytique fluide, autrement dénommées, en lit fluidisé, permettent de transformer, en présence d'un catalyseur, des coupes lourdes à longues chaînes d'hydrocarbure en coupe plus légère. Le catalyseur circule alors en lit fluidisé avec des vitesses parfois élevées entre un réacteur et un régénérateur à des températures comprises entre 450 °C et 750 °C à faible pression. En régime établi, la température du réacteur se porte sensiblement entre 510 °C et 540 °C, tandis que celle du régénérateur se porte entre 730 °C et 760 °C. Aussi, la paroi métallique du réacteur, du régénérateur et de leurs équipements internes, notamment les cyclones, les séparateurs, ou les distributeurs d'air, est recouverte d'un revêtement destiné à les protéger de l'érosion, due aux mouvements de la charger du catalyseur. En amont du réacteur, la paroi interne du riser d'alimentation peut également être recouverte du revêtement, tout comme la paroi interne des cyclones situés en aval. Ce revêtement est un matériau composite, comprenant du béton et un treillis d'ancrage métallique.

Le treillis d'ancrage métallique est ainsi soudé à la paroi métallique de manière à former des alvéoles aptes à recevoir du béton. Ledit treillis d'ancrage métallique comprend une pluralité de pièces élémentaires longitudinales ondulées reliées successivement les unes aux autres, par les sommets de leurs ondulations, en formant des surfaces cylindriques aptes à définir respectivement les alvéoles. Les pièces élémentaires longitudinales sont usuellement réalisées dans un feuillard en acier, et elles sont reliées entre elles par agrafage. Pour ce faire, les sommets des pièces élémentaires ondulées présentent alternativement des pattes d'agrafage et des orifices d'agrafage, lesquels sont réalisés dans une seule opération poinçonnage/matriçage. Les pièces élémentaires sont alors successivement ajustées les unes contre les autres décalées respectivement d'un demi-pas de manière à ce que les pattes d'agrafage puissent pénétrer à l'intérieur des orifices d'agrafage. Les pattes d'agrafage sont alors recourbées l'une vers l'autre pour solidariser les pièces élémentaires entre elles et constituer ainsi un treillis (le document US 2013 108 519 A1 décrit un treillis d'ancrage comprenant une pluralité de pièces élémentaires ondulées reliées successivement les unes aux autres grâce à un tel système d'agrafage). Le treillis est ensuite appliqué sur la paroi métallique de manière à ce que la tranche des pièces élémentaires ondulées soit portée en contact avec la paroi métallique, puis des cordons de soudures sont alors réalisés à l'intérieur des alvéoles entre les pièces élémentaires et la paroi métallique pour solidariser le treillis à la paroi métallique.

Aussi, les pièces élémentaires ondulées présentent pour chacune des ondulations et en dehors des sommets des ondulations, des languettes qui s'étendent en saillie et qui viennent alors s'étendre à l'intérieur des alvéoles lorsque le treillis est formé. Ces languettes permettent alors de mieux retenir le béton après que celui-ci a été appliqué et poussé dans les alvéoles et qu'il a durci. On pourra notamment se référer au document FR 3 028 307, lequel décrit un treillis d'ancrage présentant de telles languettes.

Ces languettes sont également réalisées lors de la seule opération de poinçonnage/matriçage du feuillard. On forme ainsi, selon la direction longitudinale du feuillard, une découpe oblongue interrompue à une extrémité de la découpe et on plie la forme découpée autour de ladite extrémité. La forme découpée et pliée constitue la languette en saillie tandis qu'une lumière oblongue est générée. La lumière oblongue ainsi générée favorise également l'ancrage du béton dans le treillis.

Les languettes contribuent significativement à l'ancrage du béton dans le treillis, mais elles rendent toutefois moins aisé le soudage du treillis sur la paroi métallique. De surcroît, elle favorise les occlusions d'air lors de l'application du béton et ultérieurement, la formation de poche de gaz et partant, la corrosion ou les dépôts de coke.

Aussi, un problème qui se pose et que vise à résoudre la présente invention est alors de fournir un treillis d'ancrage qui puisse être aisément mis en œuvre et solidarisé à la paroi métallique. Il est aussi de fournir un treillis d'ancrage qui évite la dégradation du revêtement anti-érosion lors de l'exploitation.

Dans ce but, il est proposé un treillis d'ancrage métallique destiné à être solidarisé à une paroi métallique d'une enceinte d'une unité de craquage catalytique fluide, pour former des alvéoles aptes à recevoir un revêtement anti-érosion de ladite paroi métallique, ledit treillis d'ancrage métallique comprenant une pluralité de pièces élémentaires ondulées reliées successivement les unes aux autres en formant des surfaces cylindriques aptes à définir respectivement lesdits alvéoles, lesdites surfaces cylindriques présentant chacune un axe de symétrie central, les pièces élémentaires ondulées de ladite pluralité de pièces élémentaires ondulées présentant chacune des languettes en saillie, lesdites languettes en saillie étant aptes à venir s'étendre respectivement à l'intérieur desdites alvéoles. Lesdites languettes s'étendent sur une longueur inférieure au quart de la distance qui s'étend entre ladite surface cylindrique et ledit axe de symétrie central de ladite surface cylindrique.

Ainsi, une caractéristique de l'invention réside dans la mise en œuvre de languettes courtes, dont la longueur est inférieure au quart de la distance qui s'étend de la surface cylindrique à l'axe de symétrie central de cette surface cylindrique. On observera que la surface cylindrique s'entend d'une surface définie par une génératrice s'appuyant sur une courbe directrice fermée définissant un centre. Partant, la section droite de la surface cylindrique n'est pas nécessairement circulaire, et elle est par exemple hexagonale comme on l'expliquera dans la suite de la description. L'axe de symétrie central coupe alors ledit centre et s'étend parallèlement aux génératrices.

De la sorte, il est plus aisé de venir souder le treillis à la paroi métallique de l'enceinte à travers les alvéoles. De surcroît, lorsque le treillis doit être conformé à une paroi métallique concave par exemple, le risque que l'extrémité libre des languettes vienne en contact avec ladite paroi métallique est écarté. En outre, le béton peut être appliqué et poussé à l'intérieur des alvéoles sans occlusions d'air. Aussi, grâce aux languettes courtes, durant l'exploitation à des températures supérieures à 700 °C, la dilatation différentielle du béton et des languettes est d'une moindre amplitude et partant, atténue les risques de fracture du revêtement.

On observera que le treillis selon l'invention ne comporte pas nécessairement des languettes dans toutes ses alvéoles.

De façon plus avantageuse encore, lesdites languettes s'étendent sur une longueur inférieure au cinquième de la distance qui s'étend entre ladite surface cylindrique et ledit axe de symétrie central de ladite surface cylindrique. Aussi, et comme on l'expliquera plus en détail dans la suite de la description, on réalise dans le feuillard métallique au moins deux découpes oblongues interrompues par motif de déformation, pour pouvoir former au moins deux languettes en regard l'une de l'autre par alvéoles. De la sorte, après que le béton a été appliqué et poussé, la portion de revêtement emprisonnée dans l'alvéole est en prise dans deux languettes sensiblement opposées l'une de l'autre.

Dans certaines circonstances, on peut ne ménager qu'une seule languette par alvéole, et comme indiqué ci-dessus, certains alvéoles parmi toutes les alvéoles du treillis, peuvent être dépourvus de languettes.

Aussi, lesdites pièces élémentaires ondulées présentent, avantageusement, des lumières oblongues s'étendant entre deux extrémités opposées, tandis que lesdites languettes s'étendent respectivement d'une desdites extrémités opposées de lumière oblongue jusqu'à une extrémité libre de languette. De la sorte, le béton s'écoule non seulement autour des languettes mais aussi à travers les lumières oblongues, ce qui permet un meilleur ancrage du revêtement.

Selon une caractéristique de l'invention particulièrement avantageuse, lesdites languettes s'étendent sur une longueur inférieure à la longueur desdites lumières oblongues. Ainsi, de façon pratique on réalise des découpes oblongues interrompues relativement longues, et après pliage des languettes, on vient les couper, par exemple à mi-longueur. De la sorte on obtient des languettes courtes permettant d'éviter tous les inconvénients précités, et au surplus, les lumières oblongues présentent une longueur permettant d'accueillir plus de béton. De la sorte on vient renforcer l'ancrage du revêtement.

Au surplus, selon un mode de réalisation de l'invention particulièrement avantageux, ladite extrémité libre de languette est arrondie. De la sorte, on évite aux opérateurs de se blesser lors de l'application du béton dans les alvéoles.

Selon un autre mode de mise en œuvre, les languettes s'étendent sur une longueur comprise entre ¼ et ½ de la longueur de la lumière oblongue.

En outre, et selon une caractéristique de l'invention particulièrement avantageuse, lesdites pièces élémentaires ondulées présentent des ondulations de forme trapézoïdale isocèle. Ainsi, les pièces élémentaires ondulées s'étendent longitudinalement et sont formées dans des feuillards métalliques présentant par exemple une épaisseur de 2 mm et une largeur de 25 mm. Aussi, les ondulations sont régulièrement espacées les unes des autres. De la sorte, deux pièces élémentaires ondulées sont appariées par le sommet de leurs ondulations de manière décalée d'un demi-pas, et partant, elles forment des surfaces cylindriques de section droite sensiblement hexagonale, comme on l'expliquera plus en détail ci-après. Les surfaces cylindriques présentent ainsi un axe de symétrie central auquel on peut se référer pour apprécier la longueur des languettes.

Aussi, lesdites pièces élémentaires ondulées présentent, préférentiellement, des orifices d'agrafage et des pattes d'agrafage pour pouvoir relier successivement lesdites pièces élémentaires ondulées. Selon un mode de réalisation particulier, lesdites ondulations de chacune desdites pièces élémentaires ondulées présentent alternativement, des orifices d'agrafage et des pattes d'agrafage. Par exemple, les sommets des ondulations des pièces élémentaires ondulées présentent alternativement, une paire d'orifices et une paire de pattes d'agrafage orientées vers l'extérieur du trapèze. Ainsi, en superposant deux pièces élémentaires, décalées d'un demi-pas, les paires de pattes d'agrafage de l'une des pièces élémentaires viennent s'engager respectivement dans les paires d'orifices de l'autre pièce élémentaire. Les pattes d'agrafage de chacune des paires sont ensuite recourbées l'une vers l'autre de manière à solidariser les deux pièces élémentaires. On solidarise ainsi les pièces élémentaires ondulées les unes aux autres de manière à former le treillis.

Préférentiellement, lesdites pièces élémentaires ondulées s'étendent longitudinalement. Elles incluent par exemple chacune quelques dizaines de déformations en forme de trapèze isocèle.

Aussi, et de manière particulièrement avantageuse, lesdites languettes sont ménagées par découpage et pliage dans lesdites pièces élémentaires ondulées. Elles sont ainsi réalisées en une seule opération à travers une presse de poinçonnage/matriçage adaptée. On observera que les pattes d'ancrage tout comme les orifices d'ancrage, sont réalisés lors de cette même opération.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1 est une vue schématique de dessus montrant des éléments permettant de former un treillis selon l'invention ;
- la Figure 2 est une vue schématique partielle en perspective de dessus d'un élément illustré sur la Figure 1 ;
- la Figure 3 est une vue schématique partielle en perspective d'un treillis conforme à l'invention ; et,
- la Figure 4 est une vue schématique partielle de dessus et de détail de la Figure 3.

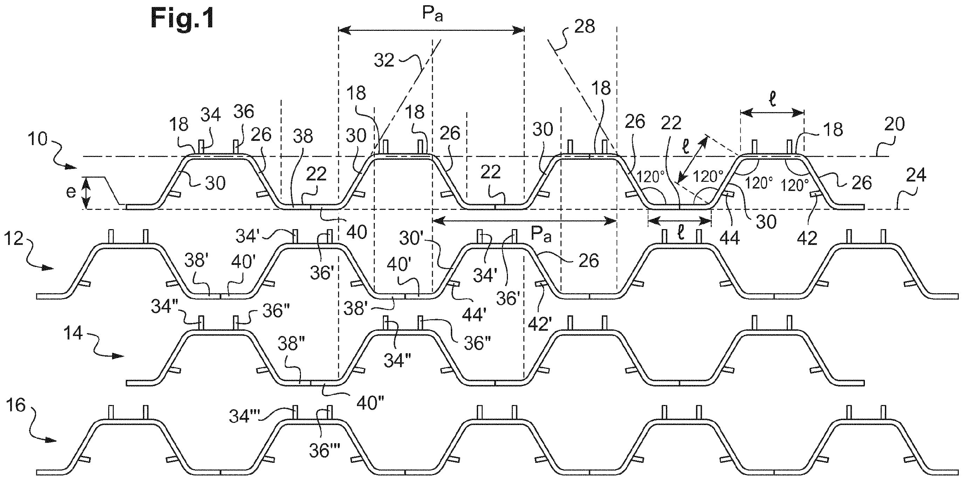

La Figure 1 illustre, à titre d'exemple, en vue de dessus en appui sur une surface horizontale et partiellement, quatre pièces élémentaires ondulées identiques, une première 10, une deuxième 12, une troisième 14 et une quatrième 16. Elles sont juxtaposées en regard les unes des autres et agencées les unes par rapport aux autres selon une disposition particulière que l'on expliquera dans la suite de la description.

Chacune des pièces élémentaires 10, 12, 14 et 16 est réalisée dans un feuillard en acier, d'une épaisseur e de 2 mm et d'une largeur de 25 mm par exemple. Des feuillards d'une largeur de 19 mm peuvent également être mis en œuvre. Ou encore, des feuillards d'une largeur de 38 mm ou bien encore de 50 mm peuvent être mis en œuvre.

Le feuillard en acier est alors déformé de manière à former des ondulations régulières de forme trapézoïdale isocèle. Pour ce faire, le feuillard est déformé en l'espèce par portion de longueur l valant 30 mm, deux fois dans le sens trigonométrique d'une valeur de 120° chacune, puis deux fois dans le sens opposé d'une même valeur. De la sorte, on forme une pièce élémentaire ondulée s'étendant selon une direction longitudinale, et présentant des premières portions parallèles 18 alignées selon une même première droite 20, des secondes portions parallèles opposées 22 alignées selon une même seconde droite 24, des premières portions inclinées 26 orientées selon une même première direction 28 et des secondes portions inclinées 30 selon une même seconde direction 32.

Outre la déformation du feuillard lui-même, que l'on réalise dans une presse de poinçonnage/matriçage adaptée, on ménage simultanément par poinçonnage, d'une part des paires de pattes d'agrafage 34, 36 dans les premières portions parallèles 18 du feuillard déformé et des paires d'orifices d'agrafage 38, 40 correspondante dans les secondes portions parallèles opposées 22, et d'autre part, des paires de languette d'ancrage, une première 42 et une seconde 44, dans les première 26 et seconde 30 portions inclinées s'étendant respectivement de chaque côté des premières portions parallèles 18.

Ainsi, la pièce élémentaire ondulée 10 présente des motifs répétitifs d'un pas Pa, et comprenant une première portion parallèle 18 et une seconde portion parallèle 22 reliées par une première portion inclinée 26, et une seconde portion inclinée 30 prolongeant la première portion parallèle 18. Ces quatre portions sensiblement d'une même longueur constituent ainsi un motif de déformation qui se répète sur toute la longueur des pièces élémentaires ondulées. Elles sont ici représentées partiellement car elles s'étendent usuellement longitudinalement sur des longueurs incluant plusieurs dizaines ou centaines de motif en fonction de leur utilisation. Aussi, elles sont sur la Figure 1 au nombre de quatre pour des raisons d'explication et de clarté. Là encore, ce nombre est habituellement de l'ordre plusieurs dizaines ou centaines en fonction de la surface à couvrir.

Les quatre pièces élémentaires ondulées 10, 12, 14, 16 étant identiques leurs mêmes parties constitutives présentent des références identiques affectées d'un signe prime «'» pour la deuxième 12, d'un signe seconde «"» pour la troisième 14 et d'un signe tierce «'''» pour la quatrième 16.

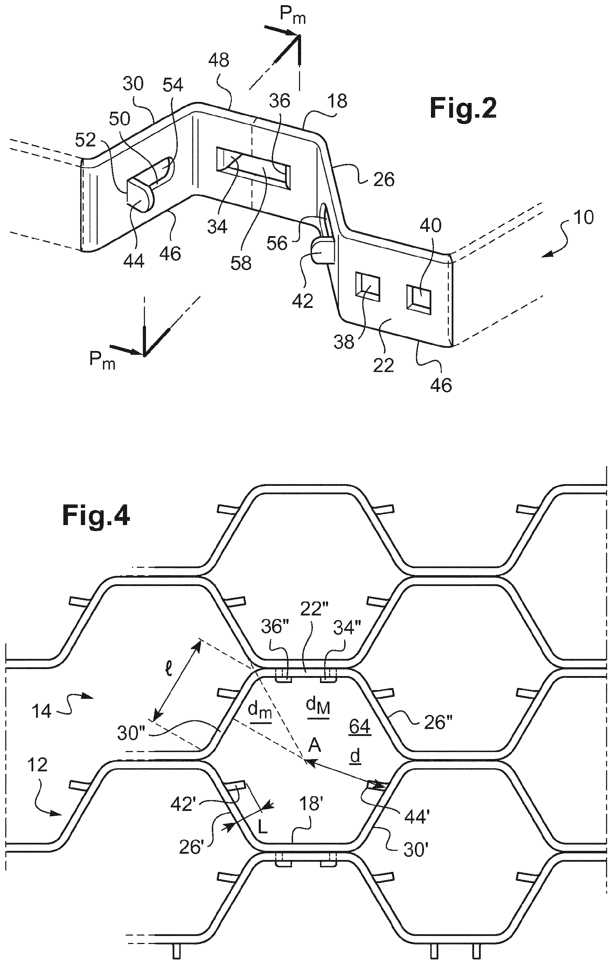

On se référera à la Figure 2 pour décrire en détail un tel motif de la pièce élémentaire ondulée 10.

La pièce élémentaire ondulée 10 présente également 2 tranches opposées, une tranche de contact 46 destinée à être appliquée contre une paroi métallique comme on l'expliquera ci-après, et une tranche libre opposée 48.

Ainsi, on retrouve les deux languettes d'ancrage 42, 44 de la paire de languettes d'ancrage, orientées l'une vers l'autre. On comprend que les languettes d'ancrage 42, 44 sont découpées dans les portions inclinées 26, 30. En effet, une découpe oblongue 50 interrompue à l'une de ses extrémités 52 est réalisée lors de l'opération de poinçonnage/matriçage et la seconde languette 44 est repoussée et pliée autour de ladite une de ses extrémités 52 pour venir en saillie de la portion inclinée 30. Elle laisse alors apparaître une seconde lumière oblongue 54.

On observera que la seconde languette 44 a non seulement été pliée pour venir s'étendre en saillie de la portion inclinée 30, mais au surplus, qu'elle a été recoupée et usinée à son extrémité pour présenter une extrémité libre arrondie. Ainsi, la longueur de la languette 44 est sensiblement inférieure à la moitié de la longueur de la lumière oblongue 54. Par exemple, la seconde lumière oblongue 54 présente une longueur de l'ordre de 13 mm, tandis que la languette 44 s'étend sur une longueur de 6 mm. Aussi, la lumière oblongue 54 présente par exemple une largeur de 8 mm. Et elle est ménagée par exemple à une distance de l'ordre de 7 mm de la tranche de contact 46 et sensiblement parallèlement à celle-ci.

En outre, selon une autre variante de réalisation de l'invention, non représentée, la portion inclinée est poinçonnée de manière à réaliser deux découpes parallèles correspondant respectivement aux bords supérieur et inférieur de la lumière oblongue et une découpe perpendiculaire centrale reliant les deux découpes parallèles. Et on vient, alors repousser une demi-languette d'un côté de la portion inclinée et une demi-languette de l'autre côté. De la sorte, on peut venir rajouter deux languettes courtes supplémentaires par alvéoles, et de surcroît, il n'est nul besoin de venir recouper les languettes.

Aussi, on observera que dans le présent exemple, la seconde languette 44 est sensiblement inclinée par rapport à la seconde portion inclinée 30 de la pièce élémentaire ondulée 10 et qu'elle s'étend en saillie de celle-ci selon une direction perpendiculaire à la seconde portion inclinée 30, sur une distance voisine de 5 mm. Partant, la seconde languette 44 s'étend en saillie de la seconde portion inclinée 30 sur une longueur égale à 1/6 de la longueur de la portion inclinée 30.

De manière symétrique à la seconde portion inclinée 30 par rapport à un plan médian Pm venant couper perpendiculairement la première portion parallèle 18 en deux parties égales, la première portion inclinée 26 présente une première lumière oblongue 56, résultant du dégagement de la première languette 42. Les dimensions respectives de la première lumière oblongue 56 et de la première languette 42 sont identiques aux secondes lumière oblongue 54 et languette 44.

En outre, la première portion parallèle 18 de la pièce élémentaire ondulée 10 présente un évidement longitudinal 58 résultant du ménagement des deux pattes d'agrafage 34, 36. L'évidement longitudinal 58 est ménagé à cheval sur le plan médian Pm, et il s'étend sur une longueur voisine des 2/3 de la longueur de la première portion parallèle 18. Elles s'étendent sur la Figure 2, parallèlement entre elles, en arrière de la première portion parallèle 18. Aussi, elles s'étendent en saillie de la première portion parallèle 18 sur une longueur inférieure à 1/3 de la longueur I de la première portion parallèle 18, et sensiblement voisine d'un quart de cette longueur I.

De surcroît, on retrouve les orifices d'agrafage 38, 40 de la paire d'orifices d'agrafage, ménagés dans la seconde portion parallèle 22. On observera que les orifices d'agrafage 38, 40 sont espacés l'un de l'autre d'une distance équivalente à la distance séparant les 2 pattes d'agrafage 34, 36.

On se reportera de nouveau sur la Figure 1 sur laquelle on observera que la deuxième pièce élémentaire ondulée 12 s'étend selon une direction parallèle à la direction de la première pièce élémentaire ondulée 10, les pattes d'agrafage 34', 36' orientées dans le même sens que celles de la première, et décalée longitudinalement d'un demi-pas Pa/2. Ainsi, les pattes d'agrafage 34', 36' de la deuxième pièce élémentaire ondulée 12 viennent s'étendre respectivement en regard des orifices d'agrafage 38, 40 de la première pièce élémentaire ondulée 10.

Quant à la troisième pièce élémentaire ondulée 14, elle s'étend selon une direction parallèle à la direction de la deuxième pièce élémentaire ondulée 12, les pattes d'agrafage 34", 36" orientées dans le même sens que celle de la deuxième 12, et décalée longitudinalement d'un demi-pas Pa/2. La troisième pièce élémentaire ondulée 14 est ainsi étendue dans une même position axiale par rapport à la première 10. Aussi, les pattes d'agrafage 34", 36" de la troisième pièce élémentaire ondulée 14 viennent s'étendre respectivement en regard des orifices d'agrafage 38', 40' de la deuxième pièce élémentaire ondulée 12.

S'agissant de la quatrième pièce élémentaire ondulée 16, elle s'étend selon une direction parallèle à la direction de la troisième pièce élémentaire ondulée 14, les pattes d'agrafage 34'", 36'" orientées dans le même sens, et décalée longitudinalement d'un demi-pas Pa/2. La quatrième pièce élémentaire ondulée 16 est ainsi étendue dans une même position axiale par rapport à la deuxième 12. Aussi, les pattes d'agrafage 34'", 36'" de la quatrième pièce élémentaire ondulée 16 viennent s'étendre respectivement en regard des orifices d'agrafage 38", 40" de la troisième pièce élémentaire ondulée 14.

De la sorte, les quatre pièces élémentaires ondulées 10, 12, 14, 16 vont être entraînées respectivement les unes contre les autres selon une direction perpendiculaire à leur direction longitudinale de manière à ce que les pattes d'agrafage 34', 36' ; 34", 36" ; 34'", 36'" des deuxième 12, troisième 14 et quatrième 16 pièces élémentaires ondulées viennent respectivement s'engager à l'intérieur des orifices d'agrafage 38, 40 ; 38', 40' ; 38", 40" des première 10, deuxième 12 et troisième 14 pièces élémentaires ondulées.

Toutes les pattes d'agrafage 34', 36' ; 34", 36" ; 34'", 36'" des paires de pattes d'agrafage, sont ensuite respectivement recourbées l'une vers l'autre, de manière à solidariser entre elles les quatre pièces élémentaires ondulées 10, 12, 14, 16.

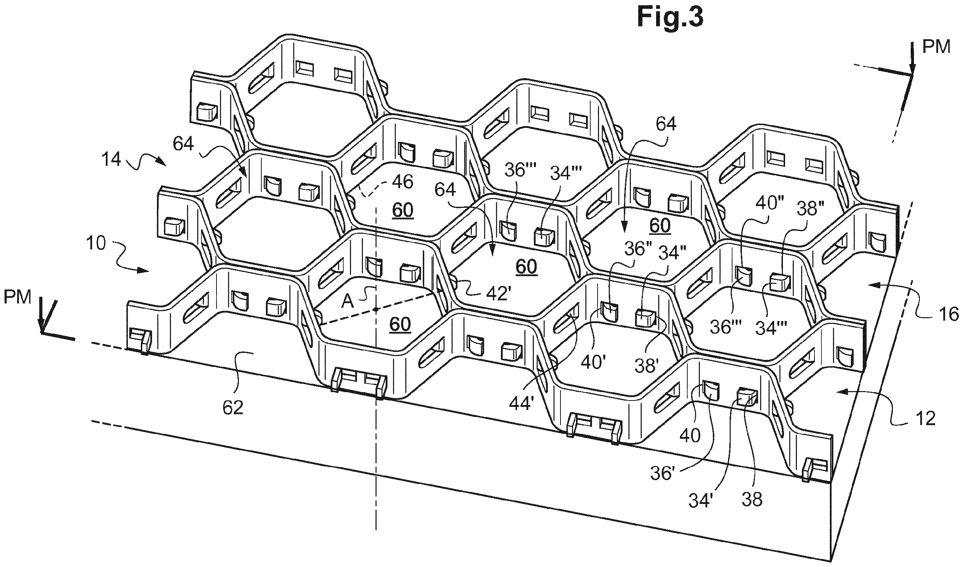

On se reportera à présent sur la Figure 3 illustrant en perspective et partiellement un treillis ainsi réalisé et définissant un plan moyen PM.

On y retrouve ainsi partiellement la première pièce élémentaire ondulée 10 reliée à la deuxième pièce 12, elle-même reliée à la troisième pièce 14, laquelle est reliée à son tour à la quatrième pièce 16.

On observera les pattes d'agrafage 34', 36' ; 34", 36" ; 34'", 36'" engagées à l'intérieur des orifices d'agrafage 38, 40 ; 38', 40' ; 38", 40" et repliées respectivement pour chacune des paires l'une vers l'autre.

De la sorte, les pièces élémentaires ondulées 10, 12, 14, 16 définissent des surfaces cylindriques fermées 60 sensiblement hexagonales et présentant respectivement un axe de symétrie central A.

Selon une variante d'exécution de l'invention non représentée, les pattes d'agrafage sont recourbées, non pas l'une vers l'autre, mais à l'opposé l'une de l'autre pour solidariser entre elles les pièces élémentaires ondulées. Aussi, selon cette dernière variante, les secondes portions parallèles peuvent présenter non pas deux orifices d'agrafage, mais un seul d'une plus grande largeur.

Le treillis illustré sur la Figure 3 est en appui sur une paroi métallique 62 et chacune des surfaces cylindriques fermées 60 définisse alors un alvéole 64. Et dans chacun des alvéoles 64 viennent s'étendre, deux languettes en regard 42, 44, et dans une moindre mesure, les pattes d'agrafage repliées 34', 36' ; 34", 36" ; 34''', 36'''.

On se reportera sur la Figure 4 illustrant en détail un alvéole 64 en vue de dessus. On y retrouve les deux languettes en regard 42', 44' qui s'étendent respectivement en saillie de deux portions inclinées 26', 30' de la deuxième pièce élémentaire ondulée 12.

La surface cylindrique fermée formée par la deuxième portion inclinée 30', la première portion parallèle 18' et la première portion inclinée 26' de la deuxième pièce élémentaire ondulée 12 d'une part, et la deuxième portion inclinée 30", la deuxième portion parallèle 22" et la première portion inclinée 26" de la troisième pièce élémentaire ondulée 14 d'autre part, définissent ainsi l'alvéole 64 hexagonal d'axe de symétrie central A. Ainsi, les languettes 42', 44' s'étendent respectivement en saillie des deux portions inclinées 26', 30' selon une normale à ces portions, sur une longueur $L$ inférieure au 1/5 de la distance $d$ qui sépare la surface cylindrique au niveau des languettes 42', 44' de l'axe de symétrie central A.

On observera que la distance maximale $dM$ qui sépare la surface cylindrique de l'axe de symétrie central A est égale, théoriquement et sans considération d'épaisseur des pièces élémentaires ondulées, à la longueur $l$ des portions 30", 22", 26", 30', 18' et 26' ; autrement dit, à la longueur des côtés de la section droite hexagonale de la surface cylindrique. Aussi, la distance minimale $dm$, qui sépare la surface cylindrique de l'axe de symétrie central A, soit la normale aux portions précitées qui rejoignent l'axe de symétrie central A, est égale à $\sqrt{3}/2$ $l$.

Partant, si la longueur $l$ est égale à 30 mm, et que la languette s'étend à partir d'une partie de la surface cylindrique la plus éloignée de l'axe de symétrie central A, elle s'étendra de la surface cylindrique sur une distance inférieure à 7,5 mm conformément à la définition de l'invention. Dans les mêmes conditions, si la languette s'étend à partir d'une partie de la surface cylindrique la plus proche de l'axe de symétrie central A, elle s'y étendra d'une distance inférieure à 6,5 mm.

On observera sur la Figure 4, que le centre de l'alvéole 64 est relativement accessible. De surcroît, les pattes d'agrafage repliées 34", 36" viennent s'étendre dans l'alvéole 64 sur une distance inférieure à celle des languettes 42', 44'. De la sorte, elle contribue à un meilleur ancrage du revêtement comme on va l'expliquer ci-après.

On se reportera de nouveau sur la Figure 3 pour décrire les avantages de l'invention.

De la sorte, le treillis ainsi formé sera aisément solidarisé à la paroi métallique 62 en réalisant la soudure des bordures inférieures des pièces élémentaires 10, 12, 14 et 16, longeant la tranche de contact 46 en appui sur la paroi. Pour ce faire, on vient apporter librement, sans être gêné par les languettes 42, 44, un métal fondu à la jointure entre les pièces élémentaires ondulées 10, 12, 14, 16 reliées entre elles, et la paroi métallique 62. Aussi, dans certaines applications on vient également souder plus aisément les pièces élémentaires ensemble le long de leurs zones de contact à l'intérieur de surfaces cylindriques.

Ensuite, on applique le béton dans les alvéoles et on le force à l'intérieur pour obtenir un parfait remplissage. L'épaisseur de béton peut bien évidemment être sensiblement supérieure à la hauteur des alvéoles pour en masquer la tranche libre. Ce surplus d'épaisseur n'excède pas 1 mm. Le béton vient alors s'écouler sous les languettes 42, 44, 42', 44', 42", 44", 42''', 44''' et aussi dans les lumières oblongues 54, 56 et sous les pattes d'agrafage repliées 34, 36, 34', 36', 34", 36", 34''', 36''' sans former d'occlusion d'air.

De la sorte, lorsque le béton a durci, on obtient un meilleur ancrage du revêtement avec une faible porosité au niveau du treillis.

Aussi, selon ladite autre variante de réalisation de l'invention, non représentée, selon laquelle chacune des alvéoles comprend quatre languettes courtes, on améliore également l'ancrage du béton.

## Revendications

1.    Treillis d'ancrage métallique destiné à être solidarisé à une paroi métallique (62) d'une enceinte d'une unité de craquage catalytique fluide, pour former des alvéoles (64) aptes à recevoir un revêtement anti-érosion de ladite paroi métallique, ledit treillis d'ancrage métallique comprenant une pluralité de pièces élémentaires ondulées (10, 12, 14, 16) reliées successivement les unes aux autres en formant des surfaces cylindriques aptes à définir respectivement lesdits alvéoles, lesdites surfaces cylindriques présentant chacune un axe de symétrie central A, les pièces élémentaires ondulées (10, 12, 14, 16) de ladite pluralité de pièces élémentaires ondulées présentant chacune des languettes (42, 44, 42', 44', 42", 44", 42''') en saillie, lesdites languettes en saillie étant aptes à venir s'étendre respectivement à l'intérieur desdites alvéoles (64) ;

    caractérisé en ce que lesdites pièces élémentaires ondulées (10, 12, 14, 16) présentent des orifices d'agrafage (38, 40) et des pattes d'agrafage (34, 36) pour pouvoir relier successivement lesdites pièces élémentaires ondulées ;
    en ce que lesdites languettes (42, 44, 42', 44', 42", 44", 42''') s'étendent sur une longueur inférieure au quart de la distance $d$ qui s'étend entre ladite surface cylindrique et ledit axe de symétrie central A de ladite surface cylindrique.

**2.** Treillis d'ancrage métallique selon la revendication 1, **caractérisé en ce que** lesdites languettes (42, 44, 42', 44', 42", 44", 42‴) s'étendent sur une longueur inférieure au cinquième de la distance d qui s'étend entre ladite surface cylindrique et ledit axe de symétrie central A de ladite surface cylindrique.

**3.** Treillis d'ancrage métallique selon la revendication 1 ou 2, **caractérisé en ce que** lesdites pièces élémentaires ondulées (10, 12, 14, 16) présentent des lumières oblongues (54, 56) s'étendant entre deux extrémités opposées, tandis que lesdites languettes (42, 44, 42', 44', 42", 44", 42‴) s'étendent respectivement d'une desdites extrémités opposées de lumière oblongue (52) jusqu'à une extrémité libre de languette.

**4.** Treillis d'ancrage métallique selon la revendication 3, **caractérisé en ce que** lesdites languettes (42, 44, 42', 44', 42", 44", 42‴) s'étendent sur une longueur inférieure à la longueur desdites lumières oblongues (54, 56).

**5.** Treillis d'ancrage métallique selon la revendication 3 ou 4, **caractérisé en ce que** ladite extrémité libre de languette (42, 44, 42', 44', 42", 44", 42‴) est arrondie.

**6.** Treillis d'ancrage métallique selon l'une quelconque des revendications 1 à 5, **caractérisé en ce que** lesdites pièces élémentaires ondulées (10, 12, 14, 16) présentent des ondulations de forme trapézoïdale isocèle.

**7.** Treillis d'ancrage métallique selon la revendication 6, **caractérisé en ce que** lesdites ondulations de chacune desdites pièces élémentaires ondulées (10, 12, 14, 16) présentent alternativement des orifices d'agrafage (38, 40) et des pattes d'agrafage (34, 36).

**8.** Treillis d'ancrage métallique selon l'une quelconque des revendications 1 à 7, **caractérisé en ce que** lesdites pièces élémentaires ondulées (10, 12, 14, 16) s'étendent longitudinalement.

**9.** Treillis d'ancrage métallique selon l'une quelconque des revendications 1 à 8, **caractérisé en ce que** lesdites languettes (42, 44, 42', 44', 42", 44", 42‴) sont ménagées par découpage et pliage dans lesdites pièces élémentaires ondulées.

**Patentansprüche**

**1.** Metallisches Verankerungsgeflecht, das bestimmt ist, um an einer Metallwand (62) eines Gehäuses einer fluidkatalytischen Crackanlage befestigt zu werden, um Zellen (64) zu bilden, die eine Erosionsschutzbeschichtung der Metallwand aufnehmen können, wobei das metallische Verankerungsgeflecht eine Vielzahl von gewellten Elementarstücken (10, 12, 14, 16) umfasst, die nacheinander miteinander verbunden sind und zylindrische Flächen bilden, die jeweils die Zellen definieren können, wobei die zylindrischen Flächen jeweils eine zentrale Symmetrieachse A aufweisen, die gewellten Elementarstücke (10, 12, 14, 16) der Vielzahl von gewellten Elementarstücken jeweils vorstehende Zungen (42, 44, 42', 44', 42", 44", 42‴) en, wobei sich die vorstehenden Zungen jeweils innerhalb der Zellen (64) erstrecken können;

   **dadurch gekennzeichnet, dass** die gewellten Elementarteile (10, 12, 14, 16) Heftlöcher (38, 40) und Heftlappen (34, 36) aufweisen, um die gewellten Elementarteile nacheinander verbinden zu können;
   dadurch, dass sich die Zungen (42, 44, 42', 44', 42", 44", 42‴) über eine Länge von weniger als einem Viertel des Abstands d erstrecken, der sich zwischen der zylindrischen Fläche und der zentralen Symmetrieachse A der zylindrischen Fläche erstreckt.

**2.** Metallisches Verankerungsgeflecht nach Anspruch 1, **dadurch gekennzeichnet, dass** sich die Zungen (42, 44, 42', 44', 42", 44", 42‴) über eine Länge von weniger als einem Fünftel des Abstands d erstrecken, der sich zwischen der zylindrischen Fläche und der zentralen Symmetrieachse A der zylindrischen Fläche erstreckt.

**3.** Metallisches Verankerungsgeflecht nach Anspruch 1 oder 2, **dadurch gekennzeichnet, dass** die gewellten Elementarstücke (10, 12, 14, 16) längliche Schlitze (54, 56) aufweisen, die sich zwischen zwei gegenüberliegenden Enden erstrecken, während sich die Zungen (42, 44, 42', 44', 42", 44", 42‴) jeweils von einem der Enden, die dem länglichen Schlitz (52) gegenüberliegen, zu einem freien Zungenende erstrecken.

**4.** Metallisches Verankerungsgeflecht nach Anspruch 3, **dadurch gekennzeichnet, dass** sich die Zungen (42, 44, 42', 44', 42", 44", 42‴) über eine Länge erstrecken, die geringer ist als die Länge der länglichen Schlitze (54, 56).

**5.** Metallisches Verankerungsgeflecht nach Anspruch 3 oder 4, **dadurch gekennzeichnet, dass** das freie Ende der Zunge (42, 44, 42', 44', 42", 44", 42‴) abgerundet ist.

**6.** Metallisches Verankerungsgeflecht nach einem der Ansprüche 1 bis 5, **dadurch gekennzeichnet, dass** die gewellten Elementarteile (10, 12, 14, 16) Wellungen von gleichschenkliger Trapezform aufweisen.

7. Metallisches Verankerungsgeflecht nach Anspruch 6, **dadurch gekennzeichnet, dass** die Wellungen jedes der gewellten Elementarteile (10, 12, 14, 16) abwechselnd Heftlöcher (38, 40) und Heftlappen (34, 36) aufweisen.

8. Metallisches Verankerungsgeflecht nach einem der Ansprüche 1 bis 7, **dadurch gekennzeichnet, dass** sich die gewellten Elementarstücke (10, 12, 14, 16) in Längsrichtung erstrecken.

9. Metallisches Verankerungsgeflecht nach einem der Ansprüche 1 bis 8, **dadurch gekennzeichnet, dass** die Zungen (42, 44, 42', 44', 42", 44", 42‴) durch Schneiden und Biegen in den gewellten Elementarstücken gebildet werden.

**Claims**

1. A metal anchoring mesh intended to be secured to a metal wall (62) of an enclosure of a fluid catalytic cracking unit, in order to form cells (64) capable of receiving an anti-erosion coating of said metal wall, said metal anchoring mesh comprising a plurality of corrugated elementary parts (10, 12, 14, 16) connected successively to one another, forming cylindrical surfaces capable of respectively defining said cells, said cylindrical surfaces each having a central axis of symmetry A, the corrugated elementary parts (10, 12, 14, 16) of said plurality of corrugated elementary parts each having projecting tabs (42, 44, 42', 44', 42", 44", 42‴), said projecting tabs being able to extend respectively inside said cells (64);

   **characterised in that** said corrugated elementary parts (10, 12, 14, 16) have fastening holes (38, 40) and fastening lugs (34, 36) for successively connecting said corrugated elementary parts;
   **in that** said tabs (42, 44, 42', 44', 42", 44", 42‴) extend over a length that is less than a quarter of the distance d̲ between said cylindrical surface and said central axis of symmetry A of said cylindrical surface.

2. A metal anchoring mesh according to claim 1, **characterised in that** said tabs (42, 44, 42', 44', 42", 44", 42‴) extend over a length that is less than one fifth of the distance d̲ between said cylindrical surface and said central axis of symmetry A of said cylindrical surface.

3. A metal anchoring mesh according to claim 1 or 2, **characterised in that** said corrugated elementary parts (10, 12, 14, 16) have oblong slots (54, 56) extending between two opposite ends, while said tabs (42, 44, 42', 44', 42", 44", 42‴) respectively extend from one of said opposite oblong slot ends (52) to a free tab end.

4. A metal anchoring mesh according to claim 3, **characterised in that** said tabs (42, 44, 42', 44', 42", 44", 42‴) extend over a length that is less than the length of said oblong slots (54, 56).

5. A metal anchoring mesh according to claim 3 or 4, **characterised in that** said free tab (42, 44, 42', 44', 42", 44", 42‴) end is rounded.

6. A metal anchoring mesh according to any one of claims 1 to 5, **characterised in that** said corrugated elementary parts (10, 12, 14, 16) have corrugations with isosceles trapezoid shapes.

7. A metal anchoring mesh according to claim 6, **characterised in that** said corrugations of each of said corrugated elementary parts (10, 12, 14, 16) have alternating fastening holes (38, 40) and fastening lugs (34, 36).

8. A metal anchoring mesh according to any one of claims 1 to 7, **characterised in that** said corrugated elementary parts (10, 12, 14, 16) extend longitudinally.

9. A metal anchoring mesh according to any one of claims 1 to 8, **characterised in that** said tabs (42, 44, 42', 44', 42", 44", 42‴) are formed by cutting and folding of said corrugated elementary parts.

# Fig.1

**Fig.2**

**Fig.4**

Fig.3

**RÉFÉRENCES CITÉES DANS LA DESCRIPTION**

**Documents brevets cités dans la description**

- US 2013108519 A1

- FR 3028307